Europäisches Patentamt

European Patent Office

Office européen des brevets

(19)

(11) Veröffentlichungsnummer : **0 545 159 B1**

(12) **EUROPÄISCHE PATENTSCHRIFT**

(45) Veröffentlichungstag der Patentschrift :
**07.09.94 Patentblatt 94/36**

(51) Int. Cl.⁵ : **H04L 25/03, H04B 7/005, H04L 1/20**

(21) Anmeldenummer : **92119743.0**

(22) Anmeldetag : **19.11.92**

(54) **Digitales Funk-Nachrichtenübertragungsverfahren mit Schätzung der Kanalimpulsantwort.**

(30) Priorität : **30.11.91 DE 4139567**

(43) Veröffentlichungstag der Anmeldung :
**09.06.93 Patentblatt 93/23**

(45) Bekanntmachung des Hinweises auf die
Patenterteilung :
**07.09.94 Patentblatt 94/36**

(84) Benannte Vertragsstaaten :
**DE ES FR IT**

(56) Entgegenhaltungen :
**EP-A- 0 434 040**
**WO-A-91/10296**

(56) Entgegenhaltungen :
**IEEE TRANSACTIONS ON VEHICULAR TECH-**
**NOLOGY Bd. 40, Nr. 3, August 1991, NEW**
**YORK US Seiten 636 - 645 LO ET AL. 'ADAP-**
**TIVE EQUALIZATION AND DIVERSITY COMBI-**
**NING FOR MOBILE RADIO USING**
**INTERPOLATED CHANNEL ESTIMATES'**

(73) Patentinhaber : **AEG MOBILE**
**COMMUNICATION GmbH**
**Wilhelm-Runge-Strasse 11**
**D-89081 Ulm (DE)**

(72) Erfinder : **Reiner, Michael**
**Rychartweg 5**
**W-7900 Ulm, Donau (DE)**

(74) Vertreter : **Körner, Ekkehard, Dipl.-Ing.**
**Patentanwalt**
**Maximilianstrasse 58**
**D-80538 München (DE)**

EP 0 545 159 B1

**Beschreibung**

Die Erfindung betrifft ein digitales Funk-Nachrichtenübertragungsverfahren nach dem Oberbegriff des Anspruchs 1. Ein solches Verfahren ist aus WO-A-91/10296 bekannt.

Bei der Übertragung digitaler Nachrichtensignale über einen Funkkanal weisen die in einem Empfänger aufgenommenen Empfangssignale gegenüber der der Übertragung zugrunde gelegten Symbolfolge Störungen auf, die allgemein durch eine Impulsantwort des Übertragungskanals beschrieben werden können. Bei Kenntnis der Kanalimpulsantwort können die Nachrichten zuverlässig aus den Empfangssignalen rekonstruiert werden.

Bei dem aus der WO-A-91/10296 bekannten Verfahren werden Symbole in einer über einen Fading unterworfenen Kanal übertragenen Symbolsequenz in einem Entzerrer geschätzt, der ein Kanalschätzfilter aufweist. Ein Fehlersignal beeinflußt eine Adaptionsschaltung, die einstellbare Koeffizienten so beeinflußt, daß ein Kanalschätzwert gebildet wird, der während der gesamten Symbolsequenz in geeigneter Weise adaptiert ist. Die Adaptionsschaltung arbeitet nach einem Algorithmus, der durch Energiemittelwerte beeinflußt wird, die man aus dem Kanalschätzwert erhält. Nach einem Fading kann der Algorithmus die Koeffizienten so beeinflussen, daß einer der Koeffizienten in fehlerhafter Weise den Kanalschätzwert beherrscht, woraus eine fehlerhafte Symbolschätzung folgt. Indem der größte der Energiemittelwerte ausgewählt wird, der den Algorithmus beeinflußt, läßt sich dieser Fehler ausgleichen.

Die Kanalimpulsantwort ist im Regelfall a priori nicht bekannt und kann darüberhinaus insbesondere aufgrund des Dopplereffekts zeitveränderlich sein. Wesentlich für die Dekodierung der Empfangssignale ist daher eine möglichst gute Schätzung der Kanalimpulsantwort aus den Empfangssignalen.

Gebräuchlich ist vor allem die Mitübertragung einer Trainingssequenz mit empfängerseitig vorbekannter Symbolfolge, mit welcher eine gute Schätzung der Kanalimpulsantwort vorgenommen werden kann. Bei zeitveränderlichem Kanal gilt die so geschätzte Impulsantwort aber nur für den Zeitpunkt der Übertragung der Trainingssequenz. Die Annahme, daß die Impulsantwort in einem Umgebungsbereich der Trainingssequenz konstant sei, führt bei schnell veränderlichem Kanal mit zunehmendem zeitlichen Abstand von der Trainingssequenz zu entsprechend ansteigenden Symbolfehlerraten.

Bei kontinuierlicher Nachführung der Kanalimpulsantwort wird wie vorstehend von einer mit Hilfe einer Trainingssequenz geschätzten Kanalimpulsantwort ausgegangen. Mit Hilfe dieser Kanalimpulsantwort wird ein a priori unbekanntes Nachrichtensymbol mit Harddecision geschätzt. Anhand dieses neuen Symbols wird die Kanalimpulsantwort für einen gegen die Trainingssequenz versetzten Zeitpunkt geschätzt und auf diese Art kontinuierlich nachgeführt (Entscheidungsrückführung). Hierfür kann in bekannter Weise z.B. ein Kalman-Filter eingesetzt werden.

Durch die Entscheidungsrückführung reagieren diese Verfahren sehr empfindlich auf Symbolfehler. Bei kleiner Geschwindigkeit eines mit der Funkanlage ausgerüsteten Fahrzeugs und hohen Storpegeln ergibt sich eine große Degradation der Empfindlichkeit im Vergleich zu einem einfachen Empfänger, bei dem die Kanalimpulsantwort in einer Umgebung um eine Trainingssequenz als konstant angenommen wird. Auch ist die Restfehlerrate (bei beliebig kleinem Störpegel) nicht vernachlässigbar. Bei Intersymbolinterferenz (Mehrwegeausbreitung mit einer Mehrwegeverzögerung größer als die Symboldauer) ist ein Entzerrer erforderlich. Dies kann zum Beispiel ein Viterbi-Entzerrer sein. Die Entscheidung eines Symbols ist dort erst nach einer entsprechend großen Verzögerung möglich (ein mehrfaches der maximalen Mehrwegeverzögerung). Dies bedeutet, daß ein Symbol erst entschieden werden kann, wenn die Kanalimpulsantwort in einer entsprechend großen Umgebung um dieses Symbol bereits bekannt ist. Damit darf die Änderungsgeschwindigkeit der Kanalimpulsantwort nicht zu groß sein, da sonst eine kontinuierliche Nachführung mit Hilfe der gerade demodulierten Symbole der Kanalimpulsantwort nicht mehr möglich ist. Bei anderen Entzerrern ergeben sich ähnliche Probleme.

Aufgabe der vorliegenden Erfindung ist es, ein Nachrichtenübertragungsverfahren der eingangs genannten Art anzugeben, das auch bei zeitveränderlichem Kanal eine gute Schätzung der Impulsantwort ermöglicht.

Diese Aufgabe wird durch die im Patentanspruch 1 beschriebenen Merkmale gelöst. Die abhängigen Ansprüche enthalten vorteilhafte Ausgestaltungen und Weiterbildungen der Erfindung.

Bei der Erfindung wird eine Darstellung der Kanalimpulsantwort als Funktionssumme einer begrenzten Zahl vorgegebener Zeitfunktionen, die wie die Kanalimpulsantwort noch von einer Verzögerungsvariablen $\tau$ abhängig sind, zugrunde gelegt. Die einzelnen Zeitfunktionen treten in der Funktionssumme mit individuellen Gewichtskoeffizienten auf, die variabel sind und durch Anpassung an die Abtastwerte der Empfangssignale mittels Fehlerminimierung ermittelt werden können. Die Fehlerminimierung erfolgt vorzugsweise nach dem Prinzip der minimalen Fehlerquadratsumme.

Ein wesentlicher Vorteil der Erfindung ist, daß die Korrelationseigenschaften der Symbolfolge des betrachteten Signalabschnitts beliebig sein können, da die Abweichungen von idealen Korrelationseigenschaften bei der Verarbeitung der Signale korrigiert werden. Die Kanalimpulsantwort wird dabei auch innerhalb des

2

EP 0 545 159 B1

bearbeiteten Signalabschnitts nicht als konstant vorausgesetzt. Etwaige zeitliche Änderungen sind durch die eine Zeitveränderung beschreibende Funktionssumme von Anfang an bei der Verarbeitung der Empfangssignale berücksichtigt.

Die Erfindung verringert die Symbolfehlerrate bei hoher Frequenz und hoher Geschwindigkeit einer an der Nachrichtenübermittlung teilnehmenden Funkanlage (Dopplerfrequenz). Dies betrifft sowohl die Restfehlerrate (Symbolfehler ohne sonstige Störungen) wie die Leistungsfähigkeit des Empfängers bei Störungen (z.B. Rauschen oder Gleichkanalstörungen). Auch bei kleinen Geschwindigkeiten und Frequenzen ergibt sich keine Verschlechterung der Symbolfehlerrate bei großen Störpegeln im Vergleich zu einem einfachen Empfänger bei dem die Kanalimpulsantwort in einer Umgebung um die Trainingssequenz als konstant angenommen wird. Intersymbolinterferenz stellt kein Problem für die Erfindung dar. Ein Viterbi-Entzerrer ist z.B. problemlos möglich.

Die Erfindung ist nachfolgend anhand von besonders vorteilhaften Beispielen noch eingehend erläutert und veranschaulicht.

1. Grundlagen

Es soll ein digitales lineares Modulationsverfahren (z.B. Phase Shift Keying PSK oder Minimum Shift Keying MSK) und ein linearer Übertragungskanal betrachtet werden. Es ist allgemein bekannt, daß das Empfangssignal $\underline{y}(t)$ dann durch die Faltung einer Kanalimpulsantwort $\underline{p}(t,\tau)$ mit den gesendeten komplexen oder reellen Symbolen $\underline{a}_k$ beschrieben werden kann:

$$\underline{y}(t) = \int_{-\infty}^{\infty} \underline{p}(t,\tau) \sum_l \underline{a}_l \delta(t - \tau - lW) \mathrm{d}\tau$$

Die Kanalimpulsantwort gibt sowohl die Eigenschaften der Modulation wie des Funkkanales wieder (Mehrwegeausbreitung). Sie beschreibt die Antwort der Übertragungsstrecke zum Zeitpunkt t auf einen Dirac-Stoß als Eingangssignal in Abhängigkeit der Verzögerung $\tau$. Es wird angenommen, daß das Empfangssignal bandbegrenzt ist und daher abgetastet werden kann. Die Abtastrate $f_a$ soll n mal die Symbolrate 1/W betragen. Das abgetastete Empfangssignal kann nun durch die diskrete Faltung der Symbole mit der abgetasteten Kanalimpulsantwort beschrieben werden:

$$\underline{y}_{nj+k} = \sum_l \underline{a}_{(j-l)} \underline{p}_{t,nl+k} \qquad k = 0, \cdots, n-1$$

$\underline{y}_{nl+k}$ sind die empfangenen komplexen Abtastwerte, $\underline{p}_{t,nl+k}$ ist die Kanalimpulsantwort zur Zeit t in Abhängigkeit der Verzögerung $\tau = (nl + k)/f_a$ und die $\underline{a}_j$ sind die gesendeten komplexen (z.B. 4 oder 8 PSK) oder reellen Symbole (z.B. 2PSK oder MSK).
Aufgrund der maximalen Geschwindigkeit ist das Dopplerspektrum bandbegrenzt. Es soll angenommen werden, daß die maximale Dopplerfrequenz wesentlich kleiner als die maximale Signalbandbreite ist. Der zeitliche Verlauf eines jeden Abtastwertes der Kanalimpulsantwort läßt sich dann durch eine Summe von si(x)=sin(x)/x Funktionen darstellen:

$$\underline{p}_{t,nl+k} = \sum_i \underline{p}_{i,nl+k} \mathrm{si}(\pi(t/T - i + 0.5))$$

Dabei ist T die bei der Bandbegrenzung des Dopplerspektrums für den Zeitverlauf der Kanalimpulsantwort maximal zulässige Abtastperiode entsprechend dem Abtastkriterium. Betrachtet man die Kanalimpulsantwort zwischen t = -0,5 T und t = 0,5 T, so kann für betraglich große i die si-Funktion durch eine sin-Funktion dividiert durch eine Konstante angenähert werden.

$$\underline{p}_{t,nl+k} = \sum_{i=1-m}^{m} \underline{p}_{i,nl+k} \mathrm{si}(\pi(t/T - i + 0.5)) \quad + \quad \underline{p}_{\infty,nl+k} \sin(\pi(t/T + 0.5))$$

mit

3

$$\underline{p}_{\infty,nl+k} = \sum_{i=-\infty}^{-m} (-1)^{i}\underline{p}_{i,nl+k}/(\pi(-i+0.5)) + \sum_{i=m+1}^{\infty} (-1)^{i}\underline{p}_{i,nl+k}/(\pi(-i+0.5))$$

Im einfachsten Falle für m=1 erhält man eine Summe mit nur drei Gliedern. Vernachlässigt man das Glied $\underline{p}_{\infty,nl+k}$ so kann jeder Koeffizient der Kanalimpulsantwort durch eine Summe von zwei Koeffizienten dargestellt werden.

## 2 Schätzung der Kanalimpulsantwort

Um den zeitliche Verlauf der Kanalimpulsantwort zu bestimmen, müssen nun die Koeffizienten der oben dargestellten Summe bestimmt werden. Es wird nun davon ausgegangen, daß in einem bestimmten Bereich die gesendeten Bits dem Empfänger bereits bekannt sind. Im einfachsten Fall wird die Kanalimpulsantwort im Bereich einer Trainingsequenz (feste dem Sender und Empfänger bekannte Sequenz) geschätzt. Es kann aber auch eine Vorabdemodulation eines größeren Bereiches des Empfangssignales erfolgen und damit sind die zufälligen Informationsbits dem Empfänger bekannt.

Die Koeffizienten werden nun so bestimmt, daß der quadratische Abstand des tatsächlichen und des aus der geschätzten Kanalimpulsantwort und den bekannten Bits berechneten Empfangssignales minimal wird. Im Falle von gaußförmigen weißem Rauschen bedeutet dies die Anwendung des Maximum Likelihood Prinzips. Für den quadratischen Abstand X gilt:

$$X = \sum_{k} X_{k}$$

mit

$$X_{k} = \sum_{j} |\underline{y}_{nj+k} - \sum_{l} \underline{a}_{j-l}\underline{p}_{t,nl+k}|^{2}$$

und $t = (nj + k)/f_{a}$.

Für $\underline{p}_{t,nl+k}$ kann die oben hergeleitete Summe von si-Funktionen eingesetzt werden. Die Minimierung ergibt sich durch Differenzierung von $X_{k}$ nach Real.- und Imaginaerteil der Koeffizienten $\underline{p}_{\alpha,n\lambda+k}$ bzw. $\underline{p}_{\infty,n\lambda+k}$. Die Nullstellen der Ableitungen müssen dann berechnet werden. Es ergibt sich dann für jedes $X_{k}$ ein Gleichungssystem. Hierbei ist jede Gleichung durch die Indizes $\alpha = 1 - m,..., m, \infty$ und $\lambda$ (Wertebereich entsprechend der Länge der Kanalimpulsantwort) gekennzeichnet:

$$\sum_{j} \underline{y}_{nj+k}\underline{a}_{j-\lambda}^{*}\mathrm{si}[\pi(\frac{nj+k}{Tf_{a}} - \alpha + 0.5)]$$

$$= \sum_{i=1-m}^{m} \sum_{j} \sum_{l} \underline{p}_{i,nl+k}\underline{a}_{j-l}\underline{a}_{j-\lambda}^{*}\mathrm{si}[\pi(\frac{nj+k}{Tf_{a}} - \alpha + 0.5)]\mathrm{si}[\pi(\frac{nj+k}{Tf_{a}} - i + 0.5)]$$

$$+ \sum_{j} \sum_{l} \underline{p}_{\infty,nl+k}\underline{a}_{j-l}\underline{a}_{j-\lambda}^{*}\mathrm{si}[\pi(\frac{nj+k}{Tf_{a}} - \alpha + 0.5)]\sin[\pi(\frac{nj+k}{Tf_{a}} + 0.5)]$$

und

$$\sum_j \underline{Y}_{nj+k}\underline{a}^*_{j-\lambda}\sin[\pi(\frac{nj+k}{Tf_a}+0.5)]$$

$$= \sum_{i=1-m}^{m}\sum_j\sum_l \underline{P}_{i,nl+k}\underline{a}_{j-l}\underline{a}^*_{j-\lambda}\sin[\pi(\frac{nj+k}{Tf_a}+0.5)]\text{si}[\pi(\frac{nj+k}{Tf_a}-i+0.5)]$$

$$+ \sum_j\sum_l \underline{P}_{\infty,nl+k}\underline{a}_{j-l}\underline{a}^*_{j-\lambda}(\sin[\pi(\frac{nj+k}{Tf_a}+0.5)])^2$$

Außer der Kanalimpulsantwort sind jetzt alle anderen Größen in dem obigen Gleichungssystem bekannt. Die Bestimmung der Kanalimpulsantwort besteht jetzt im ersten Schritt aus der mehrfachen Korrelation des Empfangssignales mit der jeweils unterschiedlich gewichteten Sequenz der dem Empfänger bekannten Symbole. Die Wichtung erfolgt mit si-Funktionen entsprechend dem Index der Gleichung. Der zweite Schritt ist dann die Lösung des obigen Gleichungssystems. Bei einer Abtastung mit n Werten pro Symbol ergeben sich n verschiedene Gleichungssysteme (nummeriert mit dem Index k).

**3 Vollständiger Empfänger**

Der erste Schritt im Empfänger ist die Schätzung der Kanalimpulsantwort im Bereich einer Trainingssequenz mit Hilfe des obigen Verfahrens. Die endgültige Demodulation kann dann mit Hilfe eines digitalen Matched Filters (an die gemessene Kanalimpulsantwort angepaßt) erfolgen. Hierbei kann zu jedem Zeitpunkt die exakt berechnete Kanalimpulsantwort verwendet werden. Es ist aber auch möglich die Kanalimpulsantwort abschnittsweise als konstant zu betrachten und entsprechend zu berechnen. Zur Korrektur der Intersymbolinterferenz können bekannte Standardverfahren angewendet werden (z.B. Viterbi Entzerrer). Die Autokorrelationsfunktion der Kanalimpulsantwort muß hierzu zu jedem Zeitpunkt oder abschnittsweise berechnet werden.

**4 Kaskadierung des Verfahrens**

In vielen Fällen ist die Trainingssequenz zu kurz um den zeitlichen Verlauf der Kanalimpulsantwort zuverlässig zu schätzen. In diesem Fall ist es sinnvoll mehrmals hintereinander zu demodulieren. In einer Vorabdemodulation werden die Informationsbits in einer Umgebung um die Trainingssequenz geschätzt und anschließend kann die Kanalimpulsantwort wieder mit einer größeren Anzahl an bekannten Bits geschätzt werden. Die Vorabdemodulation kann, insbesondere wenn der Bereich in dem demoduliert wird relativ lang ist, eine große Fehlerrate aufweisen. In diesem Falle ist auch die Schätzung der Kanalimpulsantwort mit obigem Verfahren sehr ungenau. Es besteht dann die Möglichkeit, die Vorabdemodulation ein oder mehrfach zu wiederholen und jeweils die Kanalimpulsantwort neu zu berechnen. Der Bereich der Bits für die Kanalimpulsantwortschätzung kann dabei jeweils unterschiedlich gewählt werden. Es ist z.B. sinnvoll, die erste Vorabdemodulation nur in einem Bereich dicht an der Trainingssequenz durchzuführen. Im nächsten Schritt kann dann ein größerer Bereich gewählt werden.

Im weiteren ist es möglich, das erfindungsgemäße Verfahren mit anderen Verfahren zu kombinieren, z.B. in der Weise, daß die erste Schätzung einer Kanalimpulsantwort anhand einer empfängerseitig vorbekannten Trainingssequenz und die Vorabdemodulation nach einem anderen, insbesondere auch einem bekannten Verfahren erfolgt und danach eine endgültige Schätzung der zeitveränderlichen Impulsantwort nach der Erfindung erfolgt.

5 Linearisierung der SI Funktion

Wird die Kanalimpulsantwort nur in einem kleinen Bereich um $t = 0$ benötigt (z.B. bei Zeitschlitzen die nur ca 0.5 T lang sind) können die si-Funktionen in der Summe für die Kanalimpulsantwort (in Kapitel 1) durch Geraden approximiert werden. Es reicht aus den Fall m=1 zu betrachten (3 Koeffizienten pro Abtastwert der Kanalimpulsantwort, eine andere Wahl für m führt zum gleichen Endergebnis):

$$\underline{p}_{t,nl+k} = \underline{p}_{0,nl+k}(\text{si}(0.5\pi) - 4t/(\pi T)) + \underline{p}_{1,nl+k}(\text{si}(0.5\pi) + 4t/(\pi T)) + \underline{p}_{\infty,nl+k}$$

mit

$$\underline{p}_{\infty,nl+k} = \sum_{i=-\infty}^{-1} (-1)^i \underline{p}_{i,nl+k}/(\pi(-i+0.5)) + \sum_{i=2}^{\infty}(-1)^i \underline{p}_{i,nl+k}/(\pi(-i+0.5))$$

Es ergibt sich nun die folgende Gleichung:

$$\underline{p}_{t,nl+k} = \underline{p}_{I,nl+k} t/T + \underline{p}_{II,nl+k}$$

mit

$$\underline{p}_{I,nl+k} = (4/\pi)(\underline{p}_{1,nl+k} - \underline{p}_{0,nl+k})$$

und

$$\underline{p}_{II,nl+k} = si(0.5\pi)(\underline{p}_{1,nl+k} + \underline{p}_{0,nl+k}) + \underline{p}_{\infty,nl+k}$$

Der obige Ausdruck für $\underline{p}_{t,nl+k}$ kann jetzt wieder in die Gleichung für $X_k$ eingesetzt werden und es muß dann nach dem Real - und Imaginärteil von $\underline{p}_{I,nl+k}$ bzw. $\underline{p}_{II,nl+k}$ abgeleitet werden.
Es ergibt sich das folgende Gleichungssystem:

$$\sum_j \underline{y}_{nj+k} \underline{a}^*_{j-\lambda} \frac{nj+k}{Tf_a}$$

$$= \sum_j \sum_l \underline{p}_{I,nl+k} \underline{a}_{j-l} \underline{a}^*_{j-\lambda} \left(\frac{nj+k}{Tf_a}\right)^2$$

$$+ \sum_j \sum_l \underline{p}_{II,nl+k} \underline{a}_{j-l} \underline{a}^*_{j-\lambda} \frac{nj+k}{Tf_a}$$

und

$$\sum_j \underline{y}_{nj+k} \underline{a}^*_{j-\lambda}$$

$$= \sum_j \sum_l \underline{p}_{I,nl+k} \underline{a}_{j-l} \underline{a}^*_{j-\lambda} \frac{nj+k}{Tf_a}$$

$$+ \sum_j \sum_l \underline{p}_{II,nl+k} \underline{a}_{j-l} \underline{a}^*_{j-\lambda}$$

Das obige Gleichungssytem benutzt zwei verschiedene Referenzen zur Korrelation mit dem Empfangssignal: die ungewichtete Sequenz der konjugiert komplexen Symbole und die mit einer Rampe gewichtete Sequenz der konjugiert komplexen Symbole. Die Anzahl der Gleichungen entspricht wieder der Länge der Kanalimpulsantwort (entsprechend ist der Wertebereich von $\lambda$).

6. Iterative Lösung des Gleichungssystems

Es stellt sich nun das Problem ein Gleichungssystem wie oben beschrieben zu lösen. Eine Möglichkeit hierzu ist ein iteratives Verfahren. Dies soll im folgenden beschrieben werden. Als Grundlage wird z.B. das bekannte Gauß-Seidel-Verfahren benutzt. Das in Kapitel 2 hergeleitete Gleichungssystem kann wie folgt umgeformt werden:

$$\underline{p}_{\alpha,n\lambda+k} = \frac{1}{\sum_j \underline{a}_{j-\lambda}\underline{a}_{j-\lambda}^* \mathrm{si}^2[\pi(\frac{nj+k}{Tf_a} - \alpha + 0.5)]}$$

$$\cdot \{\sum_j \underline{y}_{nj+k}\underline{a}_{j-\lambda}^* \mathrm{si}[\pi(\frac{nj+k}{Tf_a} - \alpha + 0.5)]$$

$$- \underbrace{\sum_{i=1-m}^{m} \sum_j \sum_l \underline{p}_{i,nl+k}\underline{a}_{j-l}\underline{a}_{j-\lambda}^* \mathrm{si}[\pi(\frac{nj+k}{Tf_a} - \alpha + 0.5)]\mathrm{si}[\pi(\frac{nj+k}{Tf_a} - i + 0.5)]}_{i\neq\alpha\,oder\,l\neq\lambda}$$

$$- \sum_j \sum_l \underline{p}_{\infty,nl+k}\underline{a}_{j-l}\underline{a}_{j-\lambda}^* \mathrm{si}[\pi(\frac{nj+k}{Tf_a} - \alpha + 0.5)] \sin[\pi(\frac{nj+k}{Tf_a} + 0.5)]\}$$

und

$$\underline{p}_{\infty,n\lambda+k}$$

$$= \frac{1}{\sum_j \underline{a}_{j-\lambda}\underline{a}_{j-\lambda}^* (\sin[\pi(\frac{nj+k}{Tf_a} + 0.5)])^2}$$

$$\cdot \{\sum_j \underline{y}_{nj+k}\underline{a}_{j-\lambda}^* \sin[\pi(\frac{nj+k}{Tf_a} + 0.5)]$$

$$- \sum_{i=1-m}^{m} \sum_j \sum_l \underline{p}_{i,nl+k}\underline{a}_{j-l}\underline{a}_{j-\lambda}^* \mathrm{si}[\pi(\frac{nj+k}{Tf_a} - i + 0.5)] \sin[\pi(\frac{nj+k}{Tf_a} + 0.5)]$$

$$- \sum_j \sum_{l\neq\lambda} \underline{p}_{\infty,nl+k}\underline{a}_{j-l}\underline{a}_{j-\lambda}^* (\sin[\pi(\frac{nj+k}{Tf_a} + 0.5)])^2\}$$

Es kann nun ein Wert für $\underline{p}_{\alpha,n\lambda+k}$ bzw. $\underline{p}_{\infty,n\lambda+k}$ berechnet werden, falls für alle anderen Koeffizienten der Kanalimpulsantwort bereits Schätzwerte vorliegen. Damit bilden die obigen Gleichungen die Grundlage für eine iterative Lösung des obigen Gleichungssystems. Als Startwert können nun die Korrelationen der Referenzsignale mit dem Empfangssignal verwendet werden:

$$\underline{p}_{\alpha,n\lambda+k} = \frac{1}{\sum_j \underline{a}_{j-\lambda}\underline{a}_{j-\lambda}^* \mathrm{si}^2[\pi(\frac{nj+k}{Tf_a} - \alpha + 0.5)]}$$

$$\cdot \{\sum_j \underline{y}_{nj+k}\underline{a}_{j-\lambda}^* \mathrm{si}[\pi(\frac{nj+k}{Tf_a} - \alpha + 0.5)]\}$$

und

$$\underline{p}_{\infty,n\lambda+k}$$

$$= \frac{1}{\sum_j \underline{a}_{j-\lambda}\underline{a}_{j-\lambda}^* (\sin[\pi(\frac{nj+k}{Tf_a} + 0.5)])^2}$$

$$\cdot \{\sum_j \underline{y}_{nj+k}\underline{a}_{j-\lambda}^* \sin[\pi(\frac{nj+k}{Tf_a} + 0.5)]\}$$

Im Falle der in Kapitel 5 beschriebenen Linearisierung kann analog vorgegangen werden. Die Iteration wird durch folgende Gleichungen beschrieben:

$$\underline{p}_{I,n\lambda+k} = \frac{1}{\sum_j \underline{a}_{j-\lambda}\underline{a}^*_{j-\lambda}(\frac{nj+k}{Tf_a})^2}$$

$$\cdot \{\sum_j \underline{y}_{nj+k}\underline{a}^*_{j-\lambda}\frac{nj+k}{Tf_a}$$

$$- \sum_j \sum_{l\neq\lambda} \underline{p}_{I,nl+k}\underline{a}_{j-l}\underline{a}^*_{j-\lambda}(\frac{nj+k}{Tf_a})^2$$

$$- \sum_j \sum_l \underline{p}_{II,nl+k}\underline{a}_{j-l}\underline{a}^*_{j-\lambda}\frac{nj+k}{Tf_a}\}$$

und

$$\underline{p}_{II,n\lambda+k} = \frac{1}{\sum_j \underline{a}_{j-\lambda}\underline{a}^*_{j-\lambda}}$$

$$\cdot \{\sum_j \underline{y}_{nj+k}\underline{a}^*_{j-\lambda}$$

$$- \sum_j \sum_l \underline{p}_{I,nl+k}\underline{a}_{j-l}\underline{a}^*_{j-\lambda}\frac{nj+k}{Tf_a}$$

$$- \sum_j \sum_{l\neq\lambda} \underline{p}_{II,nl+k}\underline{a}_{j-l}\underline{a}^*_{j-\lambda}\}$$

Für die Startwerte ergibt sich:

$$\underline{p}_{I,n\lambda+k} = \frac{1}{\sum_j \underline{a}_{j-\lambda}\underline{a}^*_{j-\lambda}(\frac{nj+k}{Tf_a})^2}$$

$$\cdot \{\sum_j \underline{y}_{nj+k}\underline{a}^*_{j-\lambda}\frac{nj+k}{Tf_a}\}$$

und

$$\underline{p}_{II,n\lambda+k} = \frac{1}{\sum_j \underline{a}_{j-\lambda}\underline{a}^*_{j-\lambda}} \cdot \{\sum_j \underline{y}_{nj+k}\underline{a}^*_{j-\lambda}\}$$

Im Falle einer Vorabdemodulation und einer kurzen Trainingssequenz ist nun noch eine weitere Vereinfachung eines Empfängers möglich. Es muß nun vorausgesetzt werden, daß die Trainingssequenz ideale Korrelationseigenschaften hat. Dies bedeutet, daß die Autokorrelationsfunktion der Trainingssequenz für alle Verschiebungen ungleich Null den Wert Null besitzt. Kann die Veränderung der Kanalimpulsantwort dann innerhalb der Trainingssequenz vernachlässigt werden, so stellt die mit der Trainingssequenz für die Vorabdemodulation gemessene Kanalimpulsantwort bereits den endgültigen Wert für $\underline{p}_{II,n\lambda+k}$ dar. Bei der endgültigen Schätzung der Kanalimpulsantwort muß die Iteration dann nur für $\underline{p}_{I,n\lambda+k}$ durchgeführt werden.

## 7 Weitere Darstellungen der Kanalimpulsantwort

Ausgehend von der oben hergeleiteten Summe von si-Funktionen sind weitere Modifikationen für eine vereinfachte Darstellung der Kanalimpulsantwort möglich. Es kann z.B. die si-Funktion linearisiert werden, aber die sin-Funktion beibehalten werden. Es ergibt sich die folgende Darstellung der Kanalimpulsantwort:

$$\underline{p}_{t,nl+k} = \underline{p}_{0,nl+k}(\text{si}(0.5\pi) - 4tl/(\pi T)) + \underline{p}_{1,nl+k}(\text{si}(0.5\pi) + 4tl/(\pi T)) + \underline{p}_{\infty,nl+k}\sin(\pi(tl/T + 0.5))$$

Die Approximation besteht nun aus einer Geraden und einer Sinus-Funktion. Es ergibt sich wieder ein völlig analoges Gleichungssystem, welches wieder iterativ gelößt werden kann. Hierbei kann wieder der Achsenabstand der Geraden unmittelbar aus einer Schätzung der Kanalimpulsantwort mit einer idealen Trainingssequenz bestimmt werden (siehe oben). Die Iterationen sind dann wieder nur für die übrigen Variablen erforderlich.

## 8 Simulationsergebnisse

Im folgenden werden einige Simulationsergebnisse als Beispiel für einen Empfänger nach obigen Verfahren gegeben. Es wird ein binäres digitales lineares Modulationsverfahren und ein TDMA-System vorausgesetzt. Die Zeitschlitzlänge beträgt ca 0.5 ms und die Trägerfrequenz beträgt 1800 MHz. In der Mitte eines jeden Zeitschlitzes befindet sich eine Trainingssequenz. Zum Vergleich werden Ergebnisse für einen konventionellen Empfänger dargestellt.

Als Ausbreitungsmodell wird das sogenannte "Typical Urban" Profil nach den COST 207 Spezifikationen verwendet. Dieses Profil ist im GSM-System eines der Referenzprofile zur Spezifikation der erlaubten Bitfehlerraten.

Angegeben wird im folgenden die Bitfehlerwahrscheinlichkeit des Demodulators bei Empfang eines Signales mit dem obigen Mehrwegeprofil in Abhängigkeit des Rauschpegels. Die Geschwindigkeit beträgt 250 km/h.

| $E_b/N_0$ | konv. Empfänger Bitfehler | neues Verfahren |
|---|---|---|
| 6 dB | $1.01 \cdot 10^{-1}$ | $9.1 \cdot 10^{-2}$ |
| $\infty$ | $2.4 \cdot 10^{-2}$ | $3.3 \cdot 10^{-3}$ |

Die Verbesserung durch das neue Verfahren ist deutlich zu sehen.

## Patentansprüche

1. Digitales Funk-Nachrichtenübertragungsverfahren, bei dem empfängerseitig die empfangenen Signale abgetastet und durch Verknüpfung der Abtastwerte eines Signalabschnitts mit einer dem Signalabschnitt entsprechenden Symbolfolge eine Kanalimpulsantwort geschätzt wird, gekennzeichnet durch die folgenden Merkmale:
   - es ist ein Satz von Zeitfunktionen $g_r(t, \tau)$ vorgegeben zur Darstellung der zeitveränderlichen Kanalimpulsantwort p (t, $\tau$) als Funktionssumme

$$p\ (t, \tau) = \sum_{r} q_r \cdot g_r\ (t, \tau)$$

   mit $\tau$ als Verzögerungsvariabler und $q_r$ als variablen Gewichtskoeffizienten und
   - durch Fehlerminimierung zwischen den Abtastwerten des Empfangssignals einerseits und dem Faltungsprodukt aus der Symbolfolge und der Funktionssumme andererseits werden die Gewichtskoeffizienten ermittelt.

2. Verfahren nach Anspruch 1, dadurch gekennzeichnet, daß die Zeitfunktionen bandbegrenzt sind.

3. Verfahren nach Anspruch 2, dadurch gekennzeichnet, daß die Zeitfunktionen Funktionen des Typs sin(x)/x sind.

4. Verfahren nach Anspruch 2 oder Anspruch 3, dadurch gekennzeichnet, daß zur Fehlerminimierung die Summe der Fehlerquadrate minimiert wird.

5. Verfahren nach einem der Ansprüche 1 bis 4, dadurch gekennzeichnet, daß eine Trainingssequenz mit empfängerseitig vorbekannter Symbolfolge mitübertragen und die Impulsantwort p(t, $\tau$) anhand des diese Trainingssequenz enthaltenden Signalabschnitts geschätzt wird.

6. Verfahren nach einem der Ansprüche 1 bis 5, dadurch gekennzeichnet, daß der zur Schätzung der Kanalimpulsantwort herangezogene Signalabschnitt empfängerseitig rekonstruierte Nachrichtensymbole enthält.

7. Verfahren nach Anspruch 5 und Anspruch 6, dadurch gekennzeichnet, daß mit Hilfe der aus der Trainings-sequenz geschätzten Impulsantwort a priori unbekannte Nachrichtensymbole rekonstruiert und diese für eine neue Schätzung der Kanalimpulsantwort herangezogen werden.

8. Verfahren nach Anspruch 7, gekennzeichnet durch dessen mehrfach kaskadierte Anwendung.

## Claims

1. Digital radio communication method in which the received signals are sampled by the receiver and a channel pulse response is estimated by combination of the sampled values of a signal portion with a symbol sequence corresponding to the signal portion, characterized by the following features:
   - a set of time functions gr $(t, \tau)$ is predetermined for representing the timely variable channel pulse response p $(t, \tau)$ as function sum

$$p\,(t, \tau)\ =\ \sum_{r}\ q_r \cdot g_r\,(t, \tau)$$

   with $\tau$ being the delay variable and qr being the variable weight coefficient and
   - the weight coefficients are determined by an error minimization between the sampled values of the received signal on one hand and the convolution product of the symbol sequence and the function sum on the other hand.

2. Method according to claim 1, characterized in that the time functions are band limited.

3. Method according to claim 2, characterized in that the time functions are functions of the type sin(x)/x.

4. Method according to claim 2 or claim 3, characterized in that the sum of the error squares are minimized for error minimization.

5. Method according to one of claims 1 to 4, characterized in that a training sequence with a symbol sequence pre-known by the receiver is transmitted and the pulse response p $(t, \tau)$ is estimated by means of the signal portion containing this training sequence.

6. Method according to one of claims 1 to 5, characterized in that the signal portion considered for estimating the channel pulse response contains information symbols reconstructed in the receiver.

7. Method according to claim 5 or claim 6, characterized in that a priori unknown information symbols are reconstructed by means of the pulse response estimated from the training sequence and are utilized for a new estimation of the channel pulse response.

8. Method according to claim 7, characterized by its multiply cascaded utilization.

## Revendications

1. Procédé de transmission radio numérique de données, selon lequel les signaux reçus sont détectés du côté du récepteur et une réponse impulsionnelle de canal est estimée au moyen d'une combinaison opérationnelle des valeurs de détection d'une section de signal avec un train de symboles correspondant à la section de signal, caractérisé par les particularités suivantes :
   - une famille de fonctions du temps $g_r(t, \tau)$ est préfixée pour représenter la réponse impulsionnelle de canal variable dans le temps p(t, $\tau$) sous la forme d'une somme de fonctions

$$p(t, \tau)\ =\ \sum_{r}\ q_r \cdot g_r(t, \tau)$$

   avec $\tau$ comme variable de retard et $q_r$ comme coefficients de pondération variables et
   - les coefficients de pondération sont déterminés au moyen d'une minimalisation d'erreur entre les valeurs de détection du signal de réception, d'une part, et l'intégrale du produit du train de symboles et de la somme de fonctions, d'autre part.

2. Procédé selon la revendication 1, caractérisé en ce que les fonctions du temps présentent une limitation de bande.

3. Procédé selon la revendication 2, caractérisé en ce que les fonctions du temps sont des fonctions du type sin(x)/x.

4. Procédé selon l'une des revendications 2 et 3, caractérisé en ce que, pour la minimalisation d'erreur, la somme des carrés d'erreur est rendue minimale.

5. Procédé selon l'une des revendications 1 à 4, caractérisé en ce qu'une séquence d'essai comportant un train de symboles connu au préalable du côté du récepteur fait l'objet d'une co-transmission et en ce que la réponse impulsionnelle p(t, $\tau$) est estimée à l'aide de la section de signal contenant cette séquence d'essai.

6. Procédé selon l'une des revendications 1 à 5, caractérisé en ce que la section de signal utilisée pour l'estimation de la réponse impulsionnelle de canal contient des symboles de données reconstitués du côté du récepteur.

7. Procédé selon l'une des revendications 5 et 6, caractérisé en ce que les symboles de données a *priori* inconnus sont reconstitués au moyen de la réponse impulsionnelle estimée à partir de la séquence d'essai et ces symboles de données sont utilisés pour une nouvelle estimation de la réponse impulsionnelle de canal.

8. Procédé selon la revendication 7, caractérisé par une utilisation multiple de ce procédé en cascade.